# EUROPEAN PATENT APPLICATION

(11) **EP 0 953 372 A1**
(43) Date of publication of application: **03.11.1999**
(21) Application number: 99303183.0
(22) Date of filing: 23.04.1999
(51) Int. Cl.: B01D 46/52, B31D 5/00, B31F 1/10

(54) **Apparatus for forming pleats of variable height**

(30) Priority: 25.04.1998 GB 9808717
(71) Applicant: Locker Filtration Ltd. (formerly called Locker Air-Maze Limited), Warrington, WA5 5NP (GB)
(72) Inventor: Horton, Peter, Stockport, Manchester (GB)
(74) Representative: W.P. Thompson & Co.

(57) **Abstract**

An apparatus for forming pleats is disclosed which is capable of forming variable height pleats in a continuous material web. A backing roller and a creasing roller are provided and are rotatable about parallel axes, the backing roller being arranged to rotate at a constant speed and the creasing roller, which carries at least one creasing blade at its periphery, is associated with a drive system which enables the angular speed of the creasing roller to be varied in the course of a single rotation. The creasing roller is moved at constant angular speed over an angular range in which the blade engages the moving web to perform its creasing function but can be accelerated or decelerated outside that range to advance or retard the succeeding creasing blade and so shorten or lengthen the crease interval and so vary the pleat height. The disclosed is a creasing roller operable in equivalent manner.

## Description

The present invention relates to pleater devices for forming pleats in continuous material webs for use, for example, in the formation of air filters, and is concerned in particular with a pleater device adapted to produce creases in the material web of variable spacing and hence pleats of variable height.

In conventional pleaters, a continuous web, for example of paper, is passed between a backing roller and a creasing roller which is rotating at a constant angular velocity. The creasing roller is usually in the form of a solid metal cylinder carrying one or more elongate creasing blades which extend along the periphery of the roller, parallel to its rotational axis. Usually, the creasing roller carries a number of such creasing blades spaced at equal angular intervals around the roller circumference. Each creasing blade presents a blunt rectangular profile which extends from the periphery of the creasing roller and which, as the paper passes over the backing roller beneath that blade, is arranged to deform the paper to cause a transverse crease. As a result of the equal angular spacing of the creasing blades around the periphery of the creasing roller and the fact that this roller moves at a constant rotational speed, there are formed in the paper a plurality of equally spaced transverse creases.

Downstream of the creasing and backing rollers, the creased paper web is passed through a pair of constant speed nip rollers which cause the creased paper to be folded in alternate directions about each crease in turn whereby to form a plurality of parallel pleats. The resulting pleated paper band is used, typically, in the manufacture of air filters.

In order to change the pleat height, for example to form an air filter of different thickness, it is necessary to change the transverse spacing between adjacent creases on the paper web. Conventionally, the only way to achieve this has been to substitute a different creasing roller having creasing blades disposed at correspondingly different angular spacings. Since the creasing roller/blade assemblies are relatively expensive devices, this has involved a substantial capital outlay since the same number of creasing roller/blade assemblies must be available as the number of different pleat heights which may be required to be produced. Furthermore to substitute one creasing roller/blade assembly for another in order to achieve a different pleat height has necessarily involved machine down-time which slows production and decreases the overall efficiency of the process.

An object of the present invention is to enable the pleat height to be altered without the necessity to change one creasing roller/blade assembly for another and without the consequential machinery down-time.

In accordance with a first aspect of the present invention, there is provided a creasing roller which carries one or more generally radially extending creasing blades at its periphery and which is adapted to be drivable at a first constant angular velocity over an angular range during which each blade is engaged with a material web moving at the same speed to form a crease therein, and which is arranged to be accelerated and decelerated when the blade is outside that angular range in order that the next blade arrives at the angular range either earlier or later than otherwise, so as to correspondingly shorten or lengthen the spacing between adjacent creases and hence to reduce or increase the resulting pleat height.

In accordance with a second aspect of the present invention, there is provided an apparatus for forming pleats of variable height in a continuous material web, comprising a backing roller adapted to rotate at a constant speed, a creasing roller which rotates about an axis parallel to that of the backing roller and which carries at least one creasing blade at its periphery, and a drive system enabling the angular speed of the creasing roller to be varied in the course of a single rotation such that, although the creasing roller is arranged to move with constant angular velocity over an angular range in which the blade engages the moving web to perform its creasing function, it can be accelerated and decelerated to a higher or lower speed outside that angular range so as to cause the next blade, or the next pass in the case of a single blade, to arrive at said constant angular velocity range either earlier or later than otherwise, depending upon whether the crease interval is to be shortened or lengthened so as to result in a smaller or greater pleat height.

Preferably, when the creasing roller is decelerated for increasing the crease spacing it is held at a second constant angular velocity for a period prior to being accelerated back to said first constant angular velocity and, when the creasing roller is accelerated for decreasing the crease spacing it is held at a third constant angular velocity for a period prior to being decelerated back to said first constant angular velocity.

Advantageously, the creasing roller comprises a plurality of radial arms, each of which carries a respective, radially extending creasing blade.

The creasing roller is preferably made of a lightweight material, such as aluminium, aluminium alloy or the like, which has a low mass and can therefore be more easily accelerated and decelerated during the course of its rotation.

Advantageously, the creasing roller is rotatable by way of a highly responsive drive, such as a brushless DC servo drive.

The invention is described further hereinafter, by way of example only, with reference to the accompanying drawings, in which:
Fig. 1 is a diagrammatic end view illustrating the operation of an embodiment of a pleating apparatus in accordance with the present invention;
Fig. 2 illustrates possible acceleration or deceleration phases of the creasing roller in the apparatus of Fig. 1;
Fig. 3 illustrates a constant speed phase of the creasing roller in the apparatus of Fig. 1;
Figs. 4-6 are curves illustrating different operational modes of the apparatus of Figs. 1-3; and
Fig. 7 is a block schematic diagram illustrating one possible electrical control arrangement for the apparatus of Figs. 1-3.

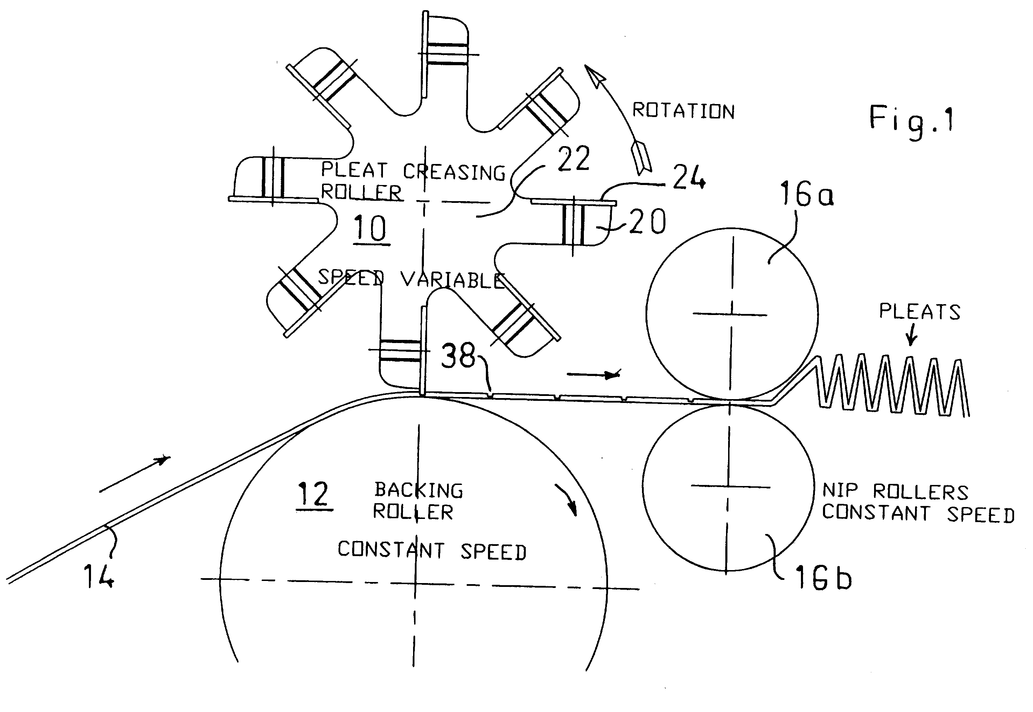

Referring first to Fig. 1, the illustrated apparatus includes a creasing roller 10 which rotates in the direction of arrow A at variable speeds as described hereinafter, and a backing roller 12 which rotates in a conventional manner at a constant speed. The rotational axes of the creasing and backing rollers 10, 12 are parallel and spaced apart by a fixed distance. Downstream of the creasing and backing rollers in the direction of movement of a continuous material web 14, in this case a web of paper, is a pair of constant speed nip rollers 16a, 16b which form the pleats 18 from the creased paper web 14 in a conventional manner. The present invention is concerned with the manner in which the creases in the paper web are formed and which enables the spacing therebetween to be adjusted.

As shown in Fig. 1, unlike the massive solid cylinder of the conventional apparatus, the creasing roller of the present invention preferably comprises a plurality of radial arms 20 extending from a central main body 22, these arms carrying respective creasing blades 24 which project slightly beyond the radially outer ends of the associated arms 20 to provide the blunt rectangular profiles which are to actually form the creases in the paper web 14. The individual blades 24 are fixed to the radial arms of the roller 10 by respective fastenings (not shown).

The creasing roller 10, consisting of the central body portion 22 and radial arm portions 20, is preferably made of a relatively light material, such as an aluminium alloy, so that its mass is relatively small and whereby it is easier to adjust the angular velocity quickly.

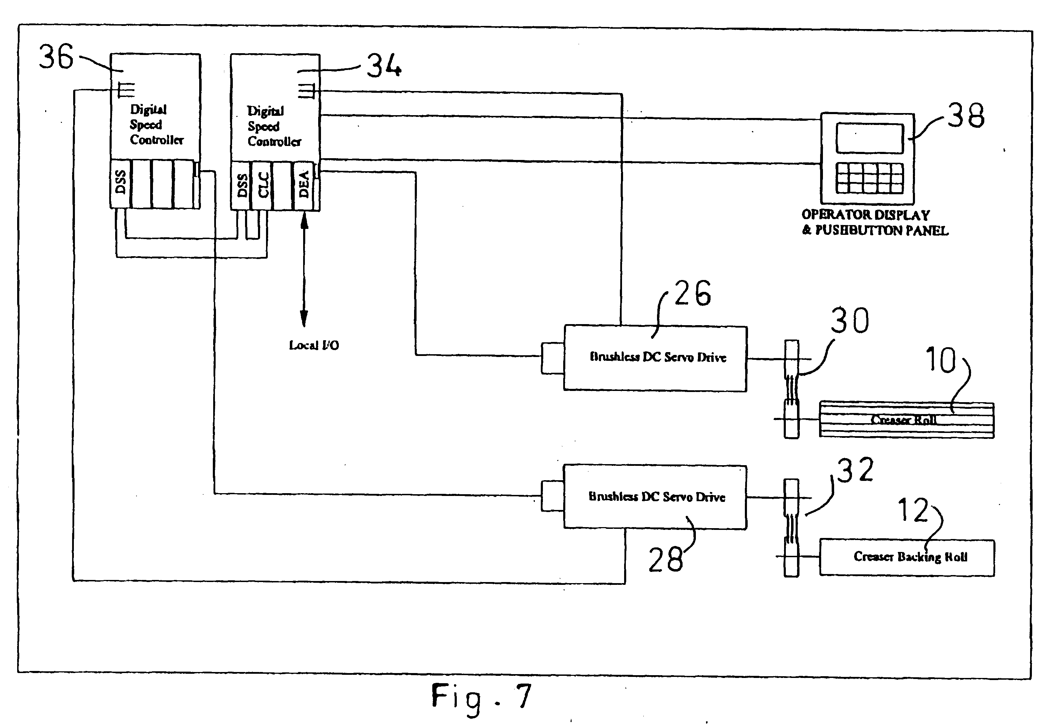

As indicated in Fig. 7, the creasing roller is driven by a variable speed drive, eg. a brushless DC servo drive 26. A second variable speed drive 28, which may again by a brushless DC servo drive, is provided for the backing roller 12, the rollers 10, 12 being connected to the drives 26, 28 via respective belt couplings 30, 32. Each brushless DC servo drive has its own respective digital speed controller 34, 36, controlled in this instance by way of an operator display and push button panel 38.

As in the case of the conventional creasing apparatus described hereinbefore, as the paper web moves over the constant speed backing roller 12 it is periodically nipped between the backing roller and each of the blades 24 in turn to form a plurality of spaced, parallel creases 38. If the roller 10 is moving at a constant angular velocity at all times, then the spacing of the creases 38 is fixed and depends on the spacing of the blades 24. In order to achieve a variable spacing of the creases, although the angular velocity of the roller 10 is arranged to be held at a constant level during the period when each blade 24 is in contact with the paper web to form the crease, during those periods when a blade 24 is approaching and leaving the latter constant speed period the roller 10 can be accelerated or decelerated in order to lengthen or reduce the time before the next blade 24 begins to form its crease.

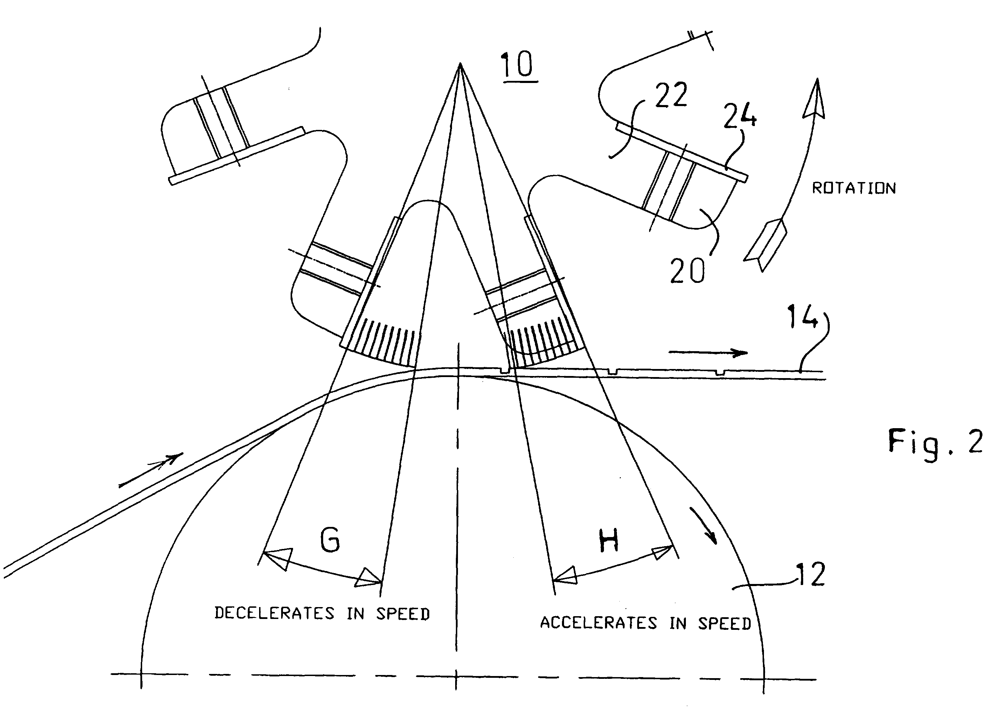

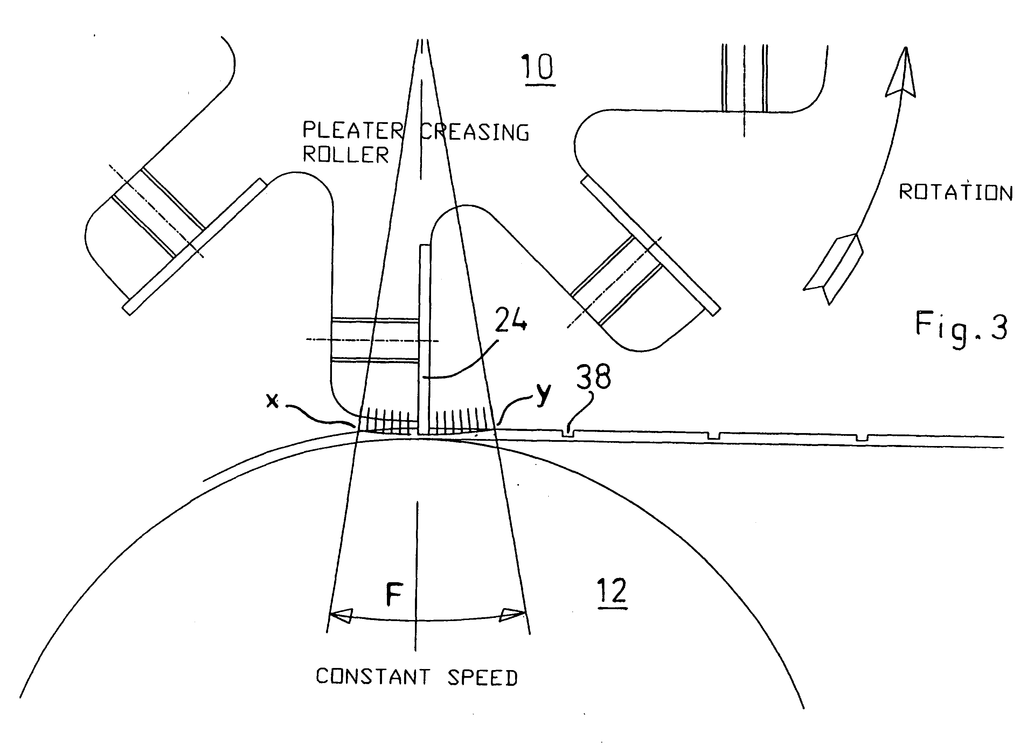

Thus, as shown in Fig. 3, the roller 10 is held at a constant angular velocity/speed over an angular region from the time when each blade 24 engages the web 14 at point x to the time when it leaves the web at point y, having made its crease 38. The backing roller 12 is run continuously at a constant speed of angular velocity identical to that of the blade 24 in range F so that the blade tip and the adjacent nip point on the periphery of the backing roller move together over this range. However, as shown in Fig. 2, outside of the range F there are angular ranges G and H where the rotation of the roller 10 can be accelerated and decelerated in order to adjust the time, either down or up, before the next blade 24 reaches the start of its constant speed region F. Thus, if the crease spacing is to be reduced, then the roller 10 is accelerated in region G so that the next blade 24 reaches its constant speed region F earlier than it would otherwise have done. Alternatively, if the crease spacing is to be increased, then the roller is decelerated in the region H so that the next blade 24 reaches its constant speed region F later than it would otherwise have done.

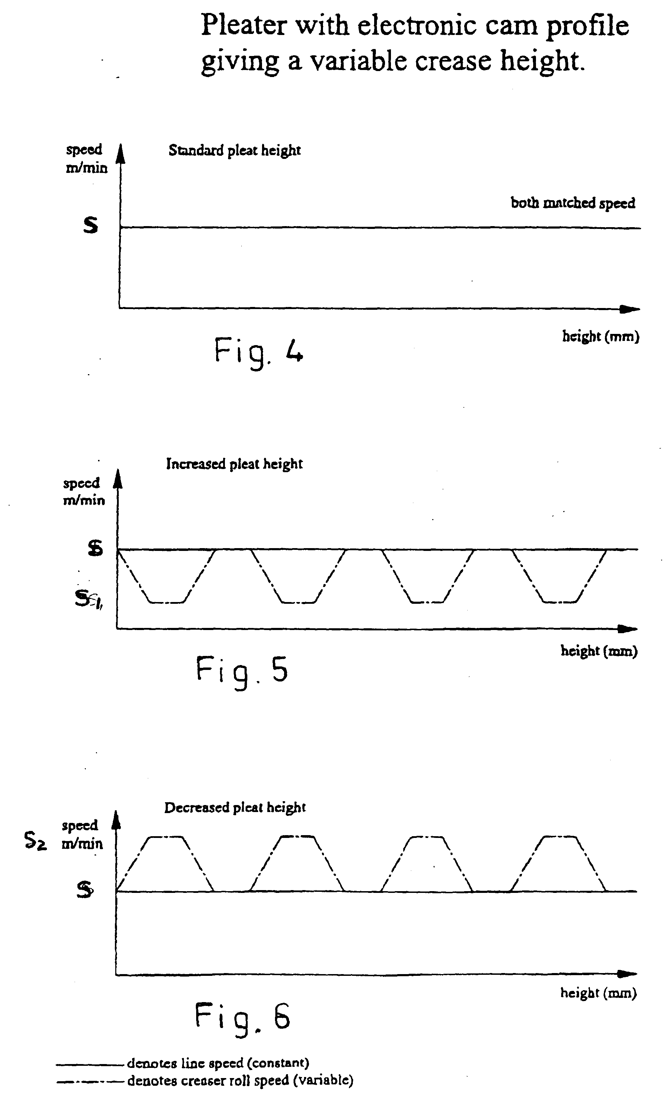

The latter operation is illustrated futher by the curves of Figs 4 to 6 to which reference is now directed.

Fig. 4 shows the situation where the apparatus is producing a standard (mid-value) pleat height and whereby both the backing roller and the creasing roller have matched constant speeds throughout their revolutions.

Fig. 5 shows the formation of creases of increased spacing, and therefore of pleats of increased height, wherein, relative to the speeds of the backing roller 12 and of the creasing roller 10 in the angular region F, the creasing roller 12 is caused to decelerate at a constant rate to a slower speed s₁, held at that slower speed s₁ for a period, and then accelerated at a constant rate back to the starting speed s₁ so that the next blade 24 arrives later at the start of the constant speed region F than it would otherwise have done.

Fig. 6 shows the formation of creases of reduced spacing, and therefore of pleats of decreased height, wherein relative to the speed s of the braking roller 12 and of the creasing roller 10 in the angular region F, the creasing roller 12 is caused to accelerate at a constant rate to a higher speed s₂, held at the constant speed s₂ for a period, and then decelerated at a constant rate back to the starting speed s so that the next blade 24 arrives earlier at the start of the constant speed region F than it would otherwise have done.

By control of the speed of the creasing roller in this manner, the spacing of the creases, and hence the height of the resulting pleats, can be adjusted, without stopping the apparatus and therefore with no machine down-time.

Although the invention has been described in relation to the application of creases to a paper web, in principle the web may be of other materials, such as metal foil, fibre glass and the like.

## Claims

1. A creasing roller (10) which carries at least one generally radially extending creasing blade (24) at its periphery and which is adapted to be drivable at a first constant angular velocity over an angular range during which each blade is engaged with a material web (14) moving at the same speed to form a crease therein, and which is arranged to be accelerated and decelerated when the blade (24) is outside that angular range in order that the next blade, or the same blade on its next rotation, arrives at the angular range either earlier or later than otherwise, so as to correspondingly shorten or lengthen the spacing between adjacent creases (38) and hence to reduce or increase the resulting pleat height.

2. A creasing roller as claimed in claim 1, which comprises a plurality of radial arms (20), each of which carries a respective, radially extending creasing blade (24).

3. A creasing roller as claimed in claim 1 or claim 2, made of a lightweight material, such as aluminium, aluminium alloy or the like, which has a low mass and can therefore be more easily accelerated and decelerated during the course of its rotation.

4. A creasing roller as claimed in any preceding claim, which is coupled to and rotatable by a responsive drive such as a D.C. servo drive (26).

5. An apparatus for forming pleats of variable height in a continuous material web (14), comprising a backing roller (12) adapted to rotate at a constant speed, a creasing roller (10) which rotates about an axis parallel to that of the backing roller and which carries at least one creasing blade (24) at its periphery, and a drive system (38,36,34,26,30) enabling the angular speed of the creasing roller (10) to be varied in the course of a single rotation such that, although the creasing roller is arranged to move with constant angular velocity over an angular range in which the blade engages the moving web (14) to perform its creasing function, it can be accelerated and decelerated to a higher or lower speed outside that angular range so as to cause the next blade (24), or the next pass in the case of a signal blade (24), to arrive at said constant angular velocity range either earlier or later than otherwise, depending upon whether the crease interval is to be shortened or lengthened so as to result in a smaller or greater pleat height.

6. An apparatus as claimed in claim 5 which is such that when the creasing roller (10) is decelerated for increasing the crease spacing it is held at a second constant angular velocity for a period prior to being accelerated back to the first mentioned constant angular velocity and, when the creasing roller is accelerated for decreasing the crease spacing it is held at a third constant angular velocity for a period prior to being decelerated back to the first mentioned constant angular velocity.

7. An apparatus as claimed in claim 5 or claim 6, wherein the creasing roller comprises a plurality of radial arms (20), each of which carries a respective, radially extending blade (24).

8. An apparatus as claimed in any of claims 5 to 7, wherein the creasing roller (10) is made of a lightweight material such as aluminium, aluminium alloy or the like which has a low mass and can therefore be more easily accelerated and decelerated during the course of its rotation.

9. An apparatus as claimed in any of claims 5 to 8, wherein the drive system comprises a responsive drive such as a brushless DC servo drive (26) by way of which the creasing roller is rotatable.

10. An apparatus as claimed in claim 9 further comprising an electronic controller arranged to controllably vary the speed of the drive.
